Europäisches Patentamt

(19) European Patent Office  (11) Numéro de publication : **0 053 091**
**B1**
Office européen des brevets

(12) **FASCICULE DE BREVET EUROPÉEN**

(45) Date de publication du fascicule du brevet :  (51) Int. Cl.⁴ : **G 01 D  5/24**, **G 01 B  7/08**
26.03.86

(21) Numéro de dépôt : **81810430.9**

(22) Date de dépôt : **29.10.81**

(54) Procédé de mesure capacitive de longueurs et d'angles.

(30) Priorité : **21.11.80 CH 8609/80**

(43) Date de publication de la demande :
**02.06.82 Bulletin 82/22**

(45) Mention de la délivrance du brevet :
**26.03.86 Bulletin 86/13**

(84) Etats contractants désignés :
**DE FR GB**

(56) Documents cités :
**FR-A- 2 176 724**
**FR-A- 2 193 912**
**FR-A- 2 388 247**
**GB-A- 2 009 944**

(73) Titulaire : **Meyer, Hans Ulrich**
**Rue des Taneurs 3**
**CH-1110 Morges (CH)**

(72) Inventeur : **Meyer, Hans Ulrich**
**Rue des Taneurs 3**
**CH-1110 Morges (CH)**

(74) Mandataire : **Ardin, Pierre et al**
**PIERRE ARDIN & CIE 22, rue du Mont-Blanc**
**CH-1211 Genève 1 (CH)**

Jouve, 18, rue St-Denis, 75001 Paris, France

## Description

L'invention se rapporte à un procédé de mesure capacitive de longueurs et d'angles, utilisant au moins deux électrodes émettrices disposées côte à côte, faisant face à au moins une électrode réceptrice déplaçable parallèlement à ces électrodes émettrices et captant un signal par influence électrostatique de celle-ci, les deux électrodes émettrices étant reliées respectivement à une première tension alternative $V_1$ et à une seconde tension alternative $V_2$, lesdites première et seconde tensions alternatives ayant même fréquence, des amplitudes respectives constantes et étant de phases opposées.

On connaît déjà par le brevet suisse CH-A-539 837, un procédé dans lequel la détermination du déplacement mutuel d'éléments capacitifs est obtenue en décomposant le trajet de déplacement en éléments individuels capacitifs successifs, dont les passages sont détectés l'un après l'autre. Il est ainsi possible d'obtenir, sur le trajet de déplacement d'un élément individuel, des tensions de déplacement exactement linéaires. Un inconvénient de ce dispositif réside toutefois dans le fait qu'il est difficile de régler le processus de mesure de telle façon que lors de la disposition en série des éléments individuels de mesure, respectivement de leurs tensions, il ne se produise pas d'erreurs de discontinuités, lesquelles peuvent être dues à des défauts accidentels de répartition des électrodes.

L'invention a pour but de supprimer ces inconvénients en éliminant de façon simple les erreurs de transfert d'un élément d'interpolation à l'autre, ceci tout en conservant les propriétés linéaires d'interpolation. Elle décrit un procédé capacitif de mesure de longueurs et d'angles, utilisant des électrodes émettrices montées en série et au moins une électrode réceptrice faisant face aux électrodes émettrices, déplaçable parallèlement à celles-ci.

Ce procédé est caractérisé en ce que les électrodes émettrices faisant face à une électrode réceptrice sont divisées en deux groupes reliés respectivement auxdites première $V_1$ et seconde $V_2$ tensions alternatives et séparés par une électrode émettrice alimentée par une troisième tension alternative $V_x$ dont la valeur varie entre l'amplitude de ladite première tension alternative $V_1$ et l'amplitude de ladite seconde tension alternative $V_2$ de telle façon que la valeur de ladite troisième tension alternative $V_x$ constitue une mesure du déplacement de l'électrode réceptrice, lorsque la valeur du signal capté par cette dernière devient égal à zéro ; les capacités des groupes précités qui se trouvent en regard de l'électrode réceptrice étant une fonction linéaire du déplacement de ladite électrode sur un parcours d'au moins une distance de décalage L entre deux électrodes émettrices consécutives.

L'avantage de ces dispositions réside dans le fait qu'aux points de transition entre deux intervalles voisins d'interpolation, la valeur de la troisième tension $V_x$ est identique suivant le sens du déplacement, à celle de la première ou deuxième tension $V_1$ ou $V_2$ de sorte que tout en conservant la linéarité élevée d'interpolation, comme on l'expliquera ultérieurement, on est assuré d'avoir des transitions sans aucun problème entre des intervalles voisins d'interpolation.

Des exemples de mise en œuvre du procédé de mesure capacitive de longueurs conforme à l'invention, sont décrits en référence au dessin annexé dans lequel :

la figure 1 illustre une disposition générale de principe des électrodes ;

la figure 2 est un schéma d'un montage électronique associé ;

la figure 3 représente les variations d'amplitude de tensions dans le schéma selon la figure 2, en fonction du déplacement X ;

la figure 4 représente la tension existant à une électrode émettrice du schéma selon la figure 2, pour un déplacement à vitesse constante, en fonction du temps ;

la figure 5 illustre une autre possibilité de modulation de la troisième tension $V_x$ pour la production d'une interpolation linéaire ;

la figure 6 illustre un mode permettant d'amener, par déphasages discrets, la troisième tension $V_x$ en forme d'onde, de $V_1$ en $V_2$ ;

la figure 7 est une variante du schéma électronique illustré à la figure 2, dans lequel le moment du passage à zéro constitue une mesure du déplacement ;

la figure 8 représente la forme du signal récepteur démodulé, dans le schéma électronique de la figure 7.

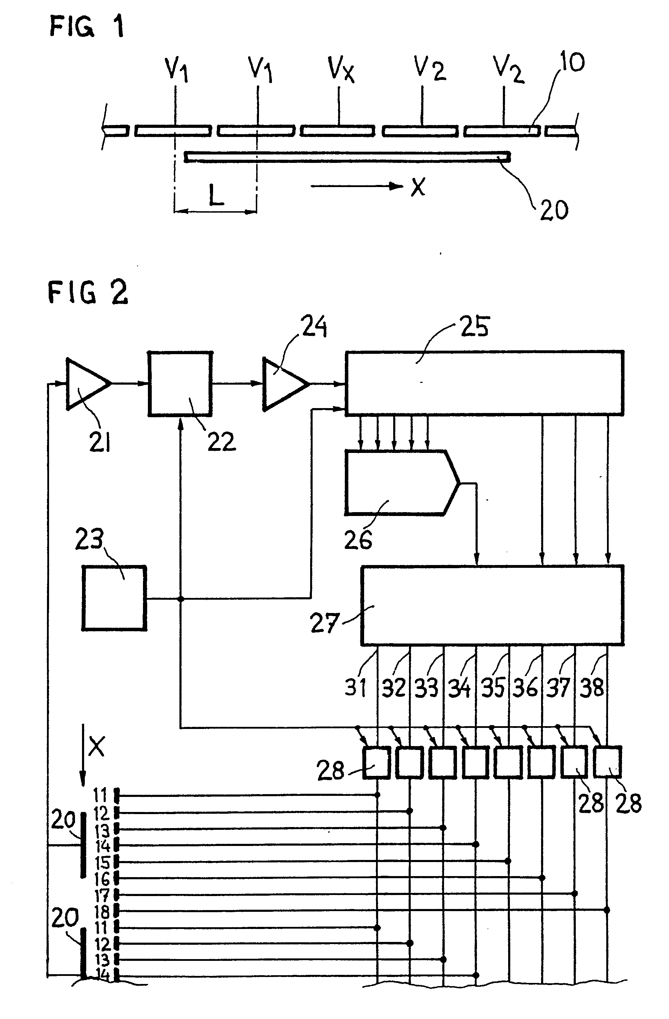

Comme on le voit à la figure 1, des électrodes émettrices 10 disposées en face d'une seule électrode réceptrice 20, sont connectées à trois tension alternatives, une électrode émettrice individuelle, habituellement, celle qui se trouve à proximité du milieu, étant connectée à une tension alternative $V_x$, tandis que les électrodes se trouvant sur l'un des côtés sont connectés à une tension $V_1$ alternative d'amplitude constante, et celles se trouvant de l'autre côté sont connectées à une tension $V_2$ alternative d'amplitude constante, les tensions $V_1$ et $V_2$ présentant la même amplitude et la même fréquence, mais étant en opposition de phase. La troisième tension alternative $V_x$ est variable, par exemple en amplitude. Si l'on pose comme condition que la somme des courants alternatifs à l'électrode réceptrice doit être égale à zéro, on constate que pour un déplacement relatif X de l'électrode réceptrice par rapport aux électrodes émettrices, la tension $V_x$ varie linéairement avec le déplacement X, et que pour un déplacement sur une distance égale à l'intervalle moyen L des électrodes émettrices, cette tension passe par zéro, du fait qu'un changement de phase se produit de $V_1$ à $V_2$. Les conditions aux limites d'un intervalle L correspondant à un intervalle d'interpolation se trouvent donc exactement définies : elles sont remplies si la tension alternative provoquée sur l'électrode réceptrice s'annule pour $V_x = V_1$, et respectivement pour $V_x = V_2$. Si cela est le cas, la répartition des tensions appliquées aux électrodes émettrices est déplacée d'une électrode par des moyens électroniques. Si l'on a plusieurs électrodes réceptrices, et si N électrodes émettrices viennent se placer sur un intervalle séparant les centres de deux électrodes réceptrices voisines, la répartition des tensions appliquées aux électrodes émettrices sera une fonction périodique de la position ayant une période de N électrodes.

La figure 2 représente le schéma d'ensemble d'un circuit électronique utilisable à cet effet, ce circuit lui-même ne faisant pas partie de l'invention. Le signal reçu en provenances des électrodes réceptrices 20 est amplifiés par un amplificateur 21 et amené à basse impédance à un démodulateur synchrone 22 piloté par un oscillateur 23. Le signal est ensuite analysé dans un comparateur 24 qui commande, de son côté, l'entrée de comptage et de décomptage d'un compteur binaire 25. L'entrée de comptage du compteur 25 est reliée, pour simplifier la représentation, également à l'oscillateur 23. L'état du compteur 25 est une mesure directe de la position relative des électrodes, comme cela ressort des explications ci-après. Les sorties à faible valeur du compteur 25 commandent un transformateur digital-analogique 26 qui fournit la tension de modulation pour la variation d'amplitude qui se produit linéairement en fonction du déplacement. Cette tension de modulation, ainsi que les sorties à haute valeur du compteur, aboutissent à un générateur de fonction 27 qui possède N sorties (dans le cas présent, 8 sorties) 31 à 38.

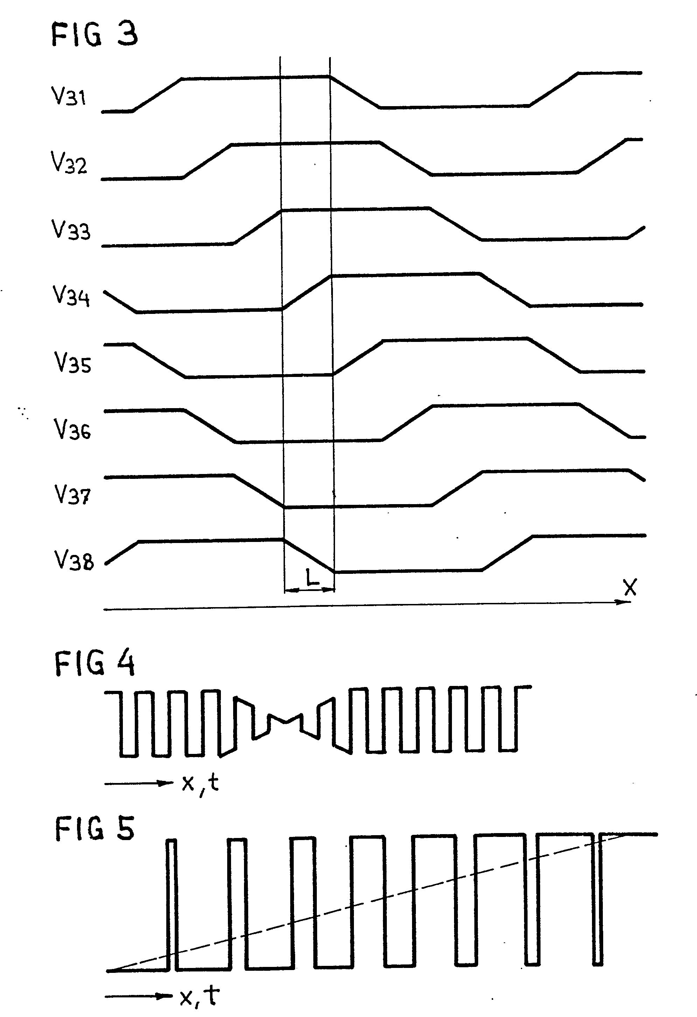

La figure 3 représente les formes d'ondes de sortie, produites par le générateur de fonction 27, en fonction de la position du compteur, par suite du déplacement. Chacune de ces sorties 31 à 38 est amenée à un modulateur 28 raccordé à l'oscillateur 23. Ces modulateurs 28 élaborent à partir des impulsions données par l'oscillateur 23 et les tensions de modulation $V_{31}$ à $V_{38}$ délivrés à chaque sortie 31 à 38 du générateur 27, une onde modulée sous forme d'une tension alternative $V_1$, $V_2$ ou $V_x$. Ces tensions alternatives sont alors acheminées vers les électrodes émettrices 11 à 18.

On a représenté à la figure 4 la forme d'onde obtenue sur une électrode émettrice, en fonction d'un déplacement selon X à vitesse constante. On voit à la figure 3, que pour un déplacement donné L, pour deux (électrodes émettrices 14 et 18) des 8 électrodes émettrices 11-18, la tension de modulation $V_{34}$ et $V_{38}$ varie constamment. L'électrode émettrice 14 se trouve en face d'une électrode réceptrice (voir fig. 2), alors que l'autre électrode émettrice 18 se situe entre deux électrodes réceptrices 20, du fait que l'extension de ces dernières n'atteint qu'environ la moitié de son intervalle moyen. L'électrode 18 n'exerce donc aucune influence sur les électrodes réceptrices, de sorte que seule l'électrode émettrice 14 située en regard d'une électrode réceptrice est raccordée à $V_x$. La figure 3 montre en outre que les variations linéaires d'électrodes voisines se suivent exactement, de sorte que la mesure est linéaire dans tout le domaine de déplacement, et que l'état du compteur reproduit donc une mesure linéaire du déplacement.

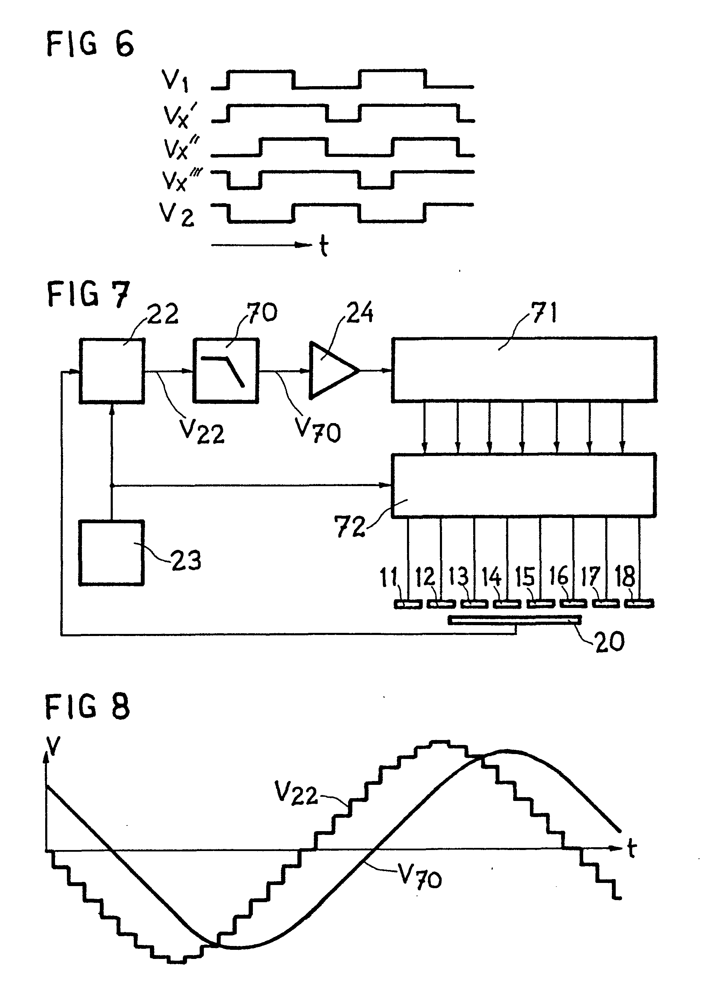

Pour pouvoir intégrer facilement toute l'électronique, il est souhaitable de réduire au minimum les fonctions linéaires, en particulier le transformateur digital-analogique 26. Ceci est le cas par exemple si, au lieu de faire varier l'amplitude linéairement avec le déplacement, on rend $V_x$ alternativement égal à $V_1$ et à $V_2$ avec une durée variable des impulsions, cette durée variant linéairement avec le déplacement. La figure 5 illustre la fonction de modulation correspondante, pour un déplacement à vitesse constante. Muni d'un filtre passe-bas, ce dispositif est équivalent à une modulation linéaire d'amplitude.

Dans la variante représentée à la figure 7 et qui ne fait pas partie de l'objet de la présente invention, on utilise à la place du compteur-décompteur 25 suivant en permanence le déplacement relatif X de l'électrode réceptrice 20, un compteur additionneur 71 qui compte de façon continue. La répartition des tensions $V_1$, $V_2$ et $V_x$ appliquée aux électrodes émettrices 11 à 18 suit donc un déplacement fictif des électrodes réceptrices 20, à une vitesse proportionnelle à la fréquence du compteur 71. Le générateur de fonction 72 élabore, à partir des impulsions délivrées par l'oscillateur 23 et conformément à l'état du compteur 71, des ondes rectangulaires $V_1$ et $V_2$ et des ondes d'interpolation $V_x$ qui sont dans ce cas des ondes $V_x'$, $V_x''$ et $V_x'''$ constituant une transition par valeurs intermédiaires discrètes entre les ondes $V_1$ et $V_2$, comme représentée à la figure 6. Ces ondes sont alors acheminées, suivant une séquence et répartition correspondant à l'état du compteur 71, aux différentes électrodes 11 à 18. Comme précédemment décrit, l'électrode mise à la tension $V_x$ se trouve bordée d'un côté par deux électrodes mises à la tension alternative $V_1$ et de l'autre côté à la tension alternative $V_2$ de phase opposée à $V_1$.

Le signal récolté sur l'électrode réceptrice 20 est conduit à un démodulateur 22 synchrone avec la fréquence de $V_1$ et $V_2$ et le signal démodulé ($V_{22}$) acheminé par un filtre passe-bas 70 au comparateur 24 destiné à détecter le passage au zéro.

A la figure 6, sont illustrées les ondes rectangulaires $V_1$ et $V_2$ et les ondes d'interpolation $V_x'$, $V_x''$ et $V_x'''$ appliquées aux électrodes émettrices 11 à 18. Les ondes $V_x'$, $V_x''$ et $V_x'''$ permettent d'obtenir, après la démodulation synchrone, une transition graduelle entre les effets produits par les tensions alternatives $V_1$ et $V_2$ sur l'électrode réceptrice 20. En effet, l'onde $V_1$ engendre, à chaque cycle dans le démodulateur synchrone 22, deux impulsions positives, l'onde $V_x'$, partiellement désynchronisée, une impulsion positive, l'onde $V_x''$ entièrement désynchronisée, aucune

impulsion, l'onde $V_x'''$ une impulsion négative, et finalement l'onde $V_2$ produit deux impulsions négatives. L'onde $V_x'$ correspond donc à 0,5 $V_1$, $V_x''$ à zéro et $V_x'''$ à + 0,5 $V_2$.

On n'a, dans ce cas, pas de transition constante, mais un nombre de valeurs intermédiaires réparties linéairement, mais qui fournissent une graduation linéaire du signal qui peut être filtrée sans difficulté, de sorte qu'on obtient de nouveau une caractéristique linéaire.

La figure 8 représente le signal démodulé ($V_{22}$) qui présente encore une ondulation résiduelle due aux graduations discrètes de la forme d'onde de transition de $V_x$. Après le filtre passe-bas 70, la tension ($V_{70}$) varie toutefois d'une façon linéaire dans la zone du passage au zéro, de sorte qu'on obtient, ici également, une relation linéaire entre le moment du passage au zéro, c'est-à-dire à l'état du compteur à ce moment, et le déplacement X.

## Revendications

1. Procédé capacitif de mesure de longueurs et d'angles, utilisant au moins deux électrodes émettrices (10) disposées côte à côte, faisant face à au moins une électrode réceptrice (20) déplaçable parallèlement à ces électrodes émettrices et captant un signal par influence électrostatique de celles-ci, les deux électrodes émettrices étant reliées respectivement à une première tension alternative ($V_1$) et à une seconde tension alternative ($V_2$), lesdites première et seconde tensions alternatives ayant même fréquence, des amplitudes respectives constantes et étant de phases opposées, caractérisé en ce que les électrodes émettrices (12-16) faisant face à une électrode réceptrice (20) sont divisées en deux groupes (12, 13 ; 15, 16) reliés respectivement auxdites première ($V_1$) et seconde ($V_2$) tensions alternatives et séparés par une électrode émettrice (14) alimentée par une troisième tension alternative ($V_x$) dont la valeur varie entre l'amplitude de ladite première tension alternative ($V_1$) et l'amplitude de ladite seconde tension alternative ($V_2$) de telle façon que la valeur de ladite troisième tension alternative ($V_x$) constitue une mesure du déplacement de l'électrode réceptrice (20), lorsqu'on impose que la valeur du signal capté par cette dernière soit égale à zéro ; les capacités des groupes précités qui se trouvent en regard de l'électrode réceptrice (20) étant une fonction linéaire du déplacement de ladite électrode (20) sur un parcours d'au moins une distance de décalage (L) entre deux électrodes émettrices consécutives.

2. Procédé selon la revendication 1, caractérisé en ce que, lors du déplacement de l'électrode réceptrice (20), l'amplitude de la troisième tension alternative ($V_x$) varie entre l'amplitude de la première tension alternative ($V_1$) et l'amplitude de la seconde tension alternative ($V_2$) en passant par zéro.

3. Procédé selon la revendication 1, caractérisé en ce que les première ($V_1$) et seconde ($V_2$) tensions alternatives sont des tensions rectangulaires en opposition de phase et en ce que la troisième tension alternative ($V_x$) est également une tension rectangulaire dont la valeur varie progressivement, ou par incréments discrets, entre les amplitudes respectives desdites première ($V_1$) et seconde ($V_2$) tensions alternatives.

4. Procédé selon la revendication 1, caractérisé en ce que la répartition des tensions appliquées aux électrodes émettrices (12-16) est déplacée d'une électrode lorsque la valeur de la troisième tension alternative ($V_x$) devient égale à la valeur de l'une ou de l'autre desdites première ($V_1$) et seconde ($V_2$) tensions alternatives.

5. Procédé selon les revendications 1 et 4, caractérisé en ce que la répartition des tensions appliquées aux électrodes émettrices est modifiée en continu, de façon qu'elle corresponde à un déplacement fictif des électrodes émettrices par rapport à l'électrode réceptrice, à vitesse constante, le moment du passage à zéro de la tension alternative sur l'électrode réceptrice devenant ainsi une mesure du déplacement.

6. Procédé selon la revendication 5, caractérisé en ce que le passage au zéro de la tension alternative sur l'électrode réceptrice (20) est détecté par un comparateur (24) monté à la suite d'un détecteur synchrone (22).

7. Procédé selon la revendication 6, caractérisé en ce que la troisième tension alternative ($V_x$) ne prend que des valeurs intermédiaires discrètes, et que l'ondulation de plus haute fréquence qui en résulte est filtrée par un filtre passe-bas (70) monté entre le détecteur synchrone (22) et le comparateur.

## Claims

1. A capacitive process for the measurement of lengths and of angles, which uses at least two emitting electrodes (10) arranged side by side, facing at least one receiving electrode (20) displaceable parallel to these emitting electrodes and collecting a signal by electrostatical influence of the latter, the two emitting electrodes being connected respectively to a first alternating voltage ($V_1$) and to a second alternating voltage ($V_2$), said first and second alternating voltages having the same frequency, respective constant amplitudes and being of opposite phase, characterized in that the emitting electrodes (12-16) facing one receiving electrode (20) are divided into two groups (12, 13 ; 15, 16) connected respectively to the first ($V_1$) and second ($V_2$) alternating voltage and separated by an emitting electrode (14) connected to a third alternating voltage ($V_x$), the value of which varies between the amplitude of said first alternating voltage ($V_1$) and the amplitude of said second alternating voltage ($V_2$) in such a manner that the value of said third alternating voltage ($V_x$) constitutes a measurement of the displacement of the receiving electrode (20), when the value of the collected signal by the latter is stated to be at zero ; the capacities of the aforesaid groups, which are placed opposite the receiving electrode (20), being a linear function of the displacement of said electrode (20) over a trajectory of at least one shift distance (L) between two consecutive emitting electrodes.

2. A process according to claim 1, characterized in that during the displacement of the receiving electrode (20), the amplitude of the third alternating voltage ($V_x$) changes between the amplitude of the first alternating voltage ($V_1$) and the amplitude of the second alternating voltage ($V_2$) by going through zero.

3. A process according to claim 1, characterized in that the first ($V_1$) and second ($V_2$) alternating voltage are rectangular voltages in opposition of phases and in that the third alternating voltage ($V_x$) also is a rectangular voltage, the value of which changes progressively, or by discrete increments, between the respective amplitudes of said first ($V_1$) or second ($V_2$) alternating voltages.

4. A process according to claim 1, characterized in that the distribution of voltages applied to the emitting electrodes (12-16) is displaced by one electrode, when the value of the third alternating voltage ($V_x$) is identical with the value of the one or the other of said first ($V_1$) or second ($V_2$) alternating voltage.

5. A process according to the claims 1 and 4, characterized in that the distribution of the voltages applied to the emitting electrodes is modified continuously, in a manner such that it corresponds to a fictitious displacement of the emitting electrodes relative to the receiving electrode, with a constant speed, the time of the passage at zero of the alternating voltage on the receiving electrode thus becoming a measurement of the displacement.

6. A process according to claim 5, characterized in that the passage at zero of the alternating voltage on the receiving electrode (20) is detected by a comparator (24) assembled with a synchronous detector (22) following it.

7. A process according to claim 6, characterized in that the third alternating voltage ($V_x$) assumes only discrete intermediary values, and in that the higher frequency wave resulting from it is filtered by a low-passing filter (70) mounted between the synchronous detector (22) and the comparator.

**Patentansprüche**

1. Kapazitives Messverfahren von Längen und Winkeln, bei dem mindestens zwei nebeneinander angeordnete Geberelektroden (10) verwendet werden, die zumindest einer Empfängerelektrode (20) gegenüber angeordnet sind, wobei diese parallel zu den Geberelektroden verschiebbar ist und von diesen durch elektrostatischen Einfluss ein Signal empfängt, und wobei die zwei Geberelektroden respektive an eine erste Wechselspannung ($V_1$) und an eine zweite Wechselspannung ($V_2$) angeschlossen sind, welche erste und zweite Wechselspannung gleiche Frequenz, respektive konstante Amplituden und entgegengesetzte Phase aufweisen, dadurch gekennzeichnet, dass die die einer Empfängerelektrode (20) gegenüberliegenden Geberelektroden (12-16) in zwei Gruppen (12, 13 ; 15, 16) geteilt sind, die respektive an die erste ($V_1$) und zweite ($V_2$) Wechselspannung angeschlossen sind und durch eine Geberelektrode (14) getrennt sind, welche von einer dritten Wechselspannung ($V_x$) gespiesen wird, dessen Wert zwischen der Amplitude der benannten ersten Wechselspannung ($V_1$) und der Amplitude der benannten zweiten Wechselspannung ($V_2$) in der Weise variiert, dass der Wert der dritten Wechselspannung ($V_x$) ein Mass der Verschiebung der Empfängerelektrode (20) bildet, wenn man festlegt, dass der Wert des von der letzteren empfangenen Signals gleich null sei ; wobei die Kapazitäten der vorher genannten, der Empfängerelektrode (20) gegenüberliegenden Gruppen über einen Weg von einer Verschiebungsdistanz (L) zwischen zwei aufeinanderfolgenden Geberelektroden eine lineare Funktion der Verschiebung der benannten Elektroden (20) sind.

2. Verfahren nach Anspruch 1, dadurch gekennzeichnet, dass bei der Verschiebung der Empfängerelektrode (20) die Amplitude der dritten Wechselspannung ($V_x$) zwischen der Amplitude der ersten Wechselspannung ($V_1$) und der Amplitude der zweiten Wechselspannung ($V_2$) variiert und dabei durch Null geht.

3. Verfahren nach Anspruch 1, dadurch gekennzeichnet, dass die erste ($V_1$) und zweite ($V_2$) Wechselspannung gegenphasige Rechteckspannungen sind und dass die dritte Wechselspannung ($V_x$) ebenfalls eine Rechteckspannung ist, deren Wert progressiv, oder über stufenartige Inkremente, zwischen den Amplituden respektive der benannten ersten ($V_1$) und zweiten ($V_2$) Wechselspannung variiert.

4. Verfahren nach Anspruch 1, dadurch gekennzeichnet, dass die Zuteilung der auf die Geberelektroden (12-16) aufgedrückten Spannungen um eine Elektrode verschoben wird, wenn der Wert der dritten Wechselspannung ($V_x$) gleich dem Wert der einen oder anderen der benannten ersten ($V_1$) oder zweiten ($V_2$) Wechselspannung wird.

5. Verfahren nach den Ansprüchen 1 und 4, dadurch gekennzeichnet, dass die Zuteilung der auf die Geberelektroden aufgedrückten Spannungen kontinuierlich verändert wird, so dass sie einer fiktiven Verschiebung der Geberelektroden gegenüber der Empfängerelektrode mit konstanter Geschwindigkeit entspricht, wobei der Nulldurchlaufszeitpunkt der Wechselspannung auf der Empfängerelektrode dann das Mass für die Verschiebung gibt.

6. Verfahren nach Anspruch 5, dadurch gekennzeichnet, dass der Nulldurchlauf der Wechselspannung auf der Empfängerelektrode (20) mittels eines hinter einem Synchrondetektor (22) geschalteten Komparators (24) festgestellt wird.

7. Verfahren nach Anspruch 6, dadurch gekennzeichnet, dass die dritte Wechselspannung $(V_x)$ nur diskrete Zwischenwerte einnimmt, und dass die daraus resultierende Hochfrequenzschwingung mittels eines zwischen den Synchrondetektor (22) und den Komparator geschalteten Tiefpassfilters (70) ausgeschieden wird.

FIG. 1

$V_1$  $V_1$  $V_X$  $V_2$  $V_2$  10

L  → X

20

FIG 2

24  25

21  22

23

26

27

31 32 33 34 35 36 37 38

28  28 28

X

20  11
12
13
14
15
16
17
18
20  11
12
13
14

FIG 3

V31

V32

V33

V34

V35

V36

V37

V38

L

X

FIG 4

x, t

FIG 5

x, t

FIG 6

$V_1$
$V_x'$
$V_x''$
$V_x'''$
$V_2$

$\longrightarrow t$

FIG 7

22　70　24　71

$V_{22}$　$V_{70}$

23

72

11 12 13 14 15 16 17 18

20

FIG 8

$V$

$V_{22}$

$V_{70}$

$t$